# DEMANDE DE BREVET EUROPEEN

(11) **EP 3 910 794 A1**
(43) Date de publication de la demande: **17.11.2021**
(21) Numéro de dépôt: 21172969.4
(22) Date de dépôt: 10.05.2021
(51) Int. Cl.: H03K 3/84, G06F 7/58, H04L 9/08

(54) **CIRCUIT GÉNÉRATEUR DE NOMBRES ALÉATOIRES**

(30) Priorité: 12.05.2020 FR 2004645
(71) Demandeur: Commissariat à l'Energie Atomique et aux Energies Alternatives, 75015 Paris (FR)
(72) Inventeur: CAGLI, Carlo, 38054 GRENOBLE CEDEX 09 (FR)
(74) Mandataire: Cabinet Camus Lebkiri

(57) **Abrégé**

L'invention concerne un circuit générateur de nombres aléatoires (20) comprenant :
- une source de bruit (21) capable de fournir un signal bruité (V_{D}) variant de manière aléatoire ;
- un circuit d'extraction (22) du signal bruité (V_{D}) comprenant un détecteur de fronts (221) configuré pour produire à partir du signal bruité un signal analogique comprenant des impulsions de tension, chaque impulsion de tension correspondant à un front montant ou descendant du signal bruité, et un convertisseur analogique-numérique (222) configuré pour générer une séquence de bits aléatoire (S) à partir du signal analogique.

## Description

### DOMAINE TECHNIQUE DE L'INVENTION

La présente invention concerne un circuit générateur de nombres aléatoires. Les nombres aléatoires sont utilisés dans de nombreuses applications, telles que les jeux informatiques, la cryptographie, la sécurité des systèmes et la simulation numérique.

### ARRIERE-PLAN TECHNOLOGIQUE DE L'INVENTION

Les générateurs de nombres aléatoires (ou RNG pour « Random Number Generator » en anglais) jouent un rôle essentiel dans le cryptage de données et la sécurisation des communications. Ils produisent une séquence de bits aléatoire qui peut être utilisée comme clé cryptographique. Ces dispositifs peuvent être réalisés de différentes façons et sont généralement classés en deux catégories : les générateurs de nombres véritablement aléatoires (ou TRNG pour « True RNG ») et les générateurs de nombres pseudo-aléatoires (ou PRNG pour « Pseudo-RNG »).

Les PRNG s'appuient sur des algorithmes déterministes pour générer des nombres qui sont en apparence aléatoires. Les TRNG sont des circuits électroniques produisant de l'aléa à partir d'une source physique d'entropie, par transformation de signaux analogiques en signaux numériques. La source physique d'entropie est généralement une source de bruit, par exemple le bruit thermique d'un dispositif semiconducteur.

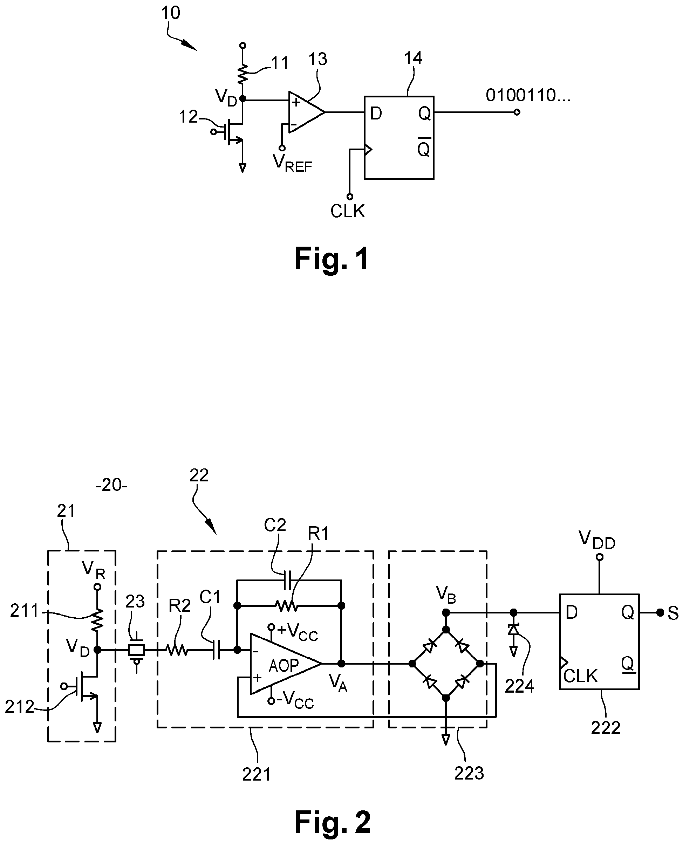

La figure 1 représente schématiquement un circuit générateur de nombres véritablement aléatoires (TRNG) 10 décrit dans les documents [« A low cost and high reliability true random number generator based on resistive random access memory », Jianguo YANG et al., IEEE 11th International Conférence on ASIC (ASICON), 2015] et [« A contact-resistive random-access-memory-based true random number generator », Chien-Yuan HUANG et al., IEEE electron device letters, Vol. 33, No. 8, pp 1108-1110, 2012].

Ce circuit TRNG 10 exploite le bruit en créneaux, aussi appelé bruit télégraphique ou RTN (pour « Random Telegraph Noise » en anglais), produit par une cellule de mémoire vive résistive 11 (RRAM, pour « Resistive Random Access Memory »). Ce bruit résulte du piégeage et du dépiégeage d'électrons au voisinage du chemin conducteur qui se forme entre les électrodes de la cellule mémoire 11.

Outre la cellule mémoire 11, le circuit TRNG 10 comprend un transistor de sélection 12 pour relier la cellule mémoire 11 à un circuit de polarisation (non représenté), un comparateur 13 et une bascule D (flip-flop) 14 cadencée par un signal d'horloge CLK. L'entrée positive du comparateur 13 est connectée à une électrode de la cellule mémoire 11 et au drain du transistor de sélection 12, tandis que l'entrée négative du comparateur 13 est connectée à une tension de référence V_{REF}. La sortie du comparateur 13 est connectée à l'entrée D de la bascule D 14. Le comparateur 13 effectue la numérisation de la tension de sortie V_{D} de la cellule mémoire 11. Si la tension de sortie V_{D} est supérieure à la tension de référence V_{REF}, alors le signal en sortie du comparateur 13 prend la valeur binaire '1'. Dans le cas contraire, le signal en sortie du comparateur 13 prend la valeur binaire '0'. La bascule D 14 échantillonne le signal en sortie du comparateur 13 à chaque front montant du signal d'horloge CLK. Entre deux fronts montants consécutifs du signal d'horloge CLK, la bascule D 14 garde en mémoire la valeur échantillonnée du signal.

Ce circuit TRNG est compact et peu coûteux à fabriquer. Cependant, il est difficile de numériser un signal bruité avec un simple comparateur et une bascule D, car il n'est pas possible de prévoir la plage de variation du signal bruité ni sa valeur moyenne. La tension de référence V_{REF}, prédéfinie, risque de ne pas être située dans cette plage de variation, rendant le circuit TRNG inopérant.

### RESUME DE L'INVENTION

Il existe donc un besoin de prévoir un circuit générateur de nombres aléatoires qui soit plus fiable et plus simple à configurer.

Selon l'invention, on tend à satisfaire ce besoin en prévoyant un circuit générateur de nombres aléatoires comprenant :
- une source de bruit capable de fournir un signal bruité variant de manière aléatoire ;
- un circuit de détection du signal bruité comprenant :
   - un détecteur de fronts configuré pour produire des impulsions de tension, chaque impulsion de tension correspondant à un front montant ou descendant du signal bruité ;
   - un convertisseur analogique-numérique configuré pour générer une séquence de bits aléatoire à partir des impulsions de tension.

Le signal analogique délivré par le détecteur de fronts et comprenant les impulsions de tension est plus facile à numériser que le signal bruité fourni par la source de bruit, car la plage de variation du signal analogique est connue et ne varie pas, contrairement à celle du signal bruité. En effet, l'amplitude des impulsions de tension est bornée par la tension d'alimentation du détecteur de fronts. La numérisation du signal analogique peut ainsi être effectuée en le comparant à une valeur de référence non-nulle inférieure à la tension d'alimentation du détecteur de fronts. Fixer la valeur de référence n'est donc pas une tâche complexe dans le circuit générateur de nombres aléatoires selon l'invention et celui-ci ne risque pas devenir inopérant à cause d'une déviation de la source de bruit.

Outre les caractéristiques qui viennent d'être évoquées précédemment, le circuit générateur de nombres aléatoires selon l'invention peut présenter une ou plusieurs caractéristiques complémentaires parmi les suivantes, considérées individuellement ou selon toutes les combinaisons techniquement possibles :
- le détecteur de fronts comprend un circuit dérivateur ;
- chaque impulsion de tension présente une amplitude qui est fonction de la dérivée du signal bruité ;
- le circuit générateur de nombres aléatoires comprend en outre un circuit redresseur disposé entre le détecteur de fronts et le convertisseur analogique-numérique ;
- le circuit générateur de nombres aléatoires comprend en outre un circuit limiteur de tension disposé entre le détecteur de fronts et le convertisseur analogique-numérique ;
- le convertisseur analogique-numérique comprend une bascule D cadencée par une horloge, la bascule D comprenant une entrée reliée au détecteur de fronts ;
- le convertisseur analogique-numérique comprend un comparateur, le comparateur ayant une première entrée reliée au détecteur de fronts et une deuxième entrée connectée à une tension de référence ;
- la source de bruit est une source de bruit en créneaux ;
- la source de bruit comprend une cellule mémoire résistive de type filamentaire, telle qu'une cellule de mémoire résistive à base d'oxyde (OxRAM) ;
- la cellule mémoire résistive est dans un état fortement résistif et présente une résistance électrique supérieure ou égale à 30 kΩ ; et
- la source de tension est couplée au circuit de détection par l'intermédiaire d'un interrupteur.

L'invention et ses différentes applications seront mieux comprises à la lecture de la description qui suit et à l'examen des figures qui l'accompagnent.

### BREVE DESCRIPTION DES FIGURES

D'autres caractéristiques et avantages de l'invention ressortiront clairement de la description qui en est donnée ci-dessous, à titre indicatif et nullement limitatif, en référence aux figures annexées, parmi lesquelles :
[Fig. 1], précédemment décrite, représente schématiquement un circuit générateur de nombres aléatoires selon l'art antérieur ;
[Fig. 2] représente schématiquement un circuit générateur de nombres aléatoires selon un premier mode de réalisation de l'invention ;
[Fig. 3A], [Fig. 3B], [Fig. 3C] et [Fig. 3D] représentent des signaux en différents points du circuit générateur de nombres aléatoires de la figure 2 ;
[Fig. 4] représente schématiquement un circuit générateur de nombres aléatoires selon un deuxième mode de réalisation de l'invention ; et
[Fig. 5] représente schématiquement un circuit générateur de nombres aléatoires selon un troisième mode de réalisation de l'invention.

Pour plus de clarté, les éléments identiques ou similaires sont repérés par des signes de référence identiques sur l'ensemble des figures.

### DESCRIPTION DETAILLEE

La figure 2 montre le schéma électrique d'un circuit générateur de nombres aléatoires (RNG) 20 selon un premier mode de réalisation de l'invention.

Le circuit RNG 20 comprend une source de bruit 21, capable de fournir un signal bruité V_{D} variant de façon aléatoire, et un circuit d'extraction 22 du signal bruité V_{D}. Le circuit d'extraction 22 est configuré pour convertir le signal bruité V_{D} en une séquence de bits aléatoire S, aussi appelée flux binaire aléatoire.

La source de bruit 21 est de préférence une source de bruit en créneaux ou RTN (pour « Random Telegraph Noise » en anglais). Les signaux entachés de RTN sont plus facilement exploitables que les autres signaux de bruit, notamment les signaux de bruit thermique, car ils présentent des variations d'amplitude plus élevée et de fréquence plus faible. Par ailleurs, une source de RTN est plus facilement modélisable (car la source RTN peut être caractérisée indépendamment du circuit d'extraction) et moins sensible aux variations de température qu'une source de bruit thermique. Utiliser une source de RTN plutôt qu'une source de bruit thermique rend donc le circuit RNG plus résistant aux attaques basées sur des variations de température. Une source de RTN facilite également la qualification du circuit RNG pour les applications de sécurité.

Dans le mode de réalisation illustré par la figure 2, la source de bruit 21 comprend une cellule mémoire résistive 211 de type filamentaire et son circuit de polarisation.

La cellule mémoire résistive 211 comprend une première électrode, reliée électriquement au circuit d'extraction 22, une deuxième électrode, opposée à la première électrode et connectée à une tension de polarisation, par exemple une tension de lecture V_{R}, et une couche de matériau résistif disposée entre les première et deuxième électrodes. La cellule mémoire résistive 211 est par exemple une cellule de mémoire résistive à base d'oxyde (OxRAM). Les première et deuxième électrodes sont alors séparées par une couche d'oxyde, par exemple en oxyde d'hafnium (HfO₂).

Le signal bruité V_{D} à partir duquel est générée la séquence de bits aléatoire S est de préférence un signal de lecture de la cellule mémoire résistive 211. La cellule mémoire résistive 211 génère du RTN lorsqu'elle se trouve dans l'état fortement résistif (HRS) ou dans l'état faiblement résistif (LRS). Cependant, l'amplitude des variations du signal bruité V_{D} est plus importante lorsque la cellule mémoire est dans l'état fortement résistif. Afin d'obtenir un signal bruité V_{D} plus facilement exploitable, la cellule mémoire résistive 211 est avantageusement programmée dans l'état fortement résistif. La résistance de la cellule mémoire résistive 211 est de préférence supérieure ou égale à 30 KΩ.

Le circuit de polarisation de la cellule mémoire résistive 211 comprend de préférence un transistor de sélection 212. Ce transistor de sélection 212 permet de mettre sous tension la cellule mémoire résistive 211. Il est dimensionné pour permettre le passage d'un courant suffisamment élevé pour programmer la cellule mémoire résistive 211 dans l'état faiblement résistif ou (préférentiellement) dans l'état fortement résistif. Le transistor de sélection 212 est par exemple un transistor MOS dont l'électrode de drain est connectée à la première électrode de la cellule mémoire 211. La connexion entre l'électrode de drain du transistor de sélection 212 et la première électrode de la cellule mémoire 211 constitue la sortie de la source de bruit 21.

Le transistor MOS permet la lecture de la cellule mémoire résistive 211 à une faible tension de lecture V_{R}. Suivant la valeur de tension appliquée à sa grille, le transistor MOS forme avec la cellule mémoire résistive 211 un pont diviseur de tension pour extraire le signal bruité V_{D}. La tension de grille du transistor MOS est avantageusement choisie de sorte que le transistor de sélection 212 ait une résistance électrique du même ordre de grandeur que celle de la cellule mémoire résistive 211, par exemple entre 10 kΩ et 100 KΩ.

La source de bruit 21 peut être couplée au circuit d'extraction 22 par l'intermédiaire d'un interrupteur 23, aussi appelé porte de sélection (« pass-gate » en anglais). Autrement dit, l'interrupteur 23 est connecté entre la sortie de la source de bruit 21 et l'entrée du circuit d'extraction 22. L'interrupteur 23 permet d'isoler la source de bruit 21 du circuit d'extraction 22, notamment lors de la programmation de la cellule mémoire résistive 211.

Le circuit d'extraction 22 comprend un détecteur de fronts montants et/ou descendants 221 et un convertisseur analogique-numérique 222. Le détecteur de fronts 221 est configuré pour produire, à partir du signal bruité V_{D}, un signal analogique comprenant des impulsions de tension positives et/ou des impulsions de tension négatives. Chaque impulsion de tension correspond à un front (ou transition) montant(e) ou descendant(e) du signal bruité V_{D}. La plupart des impulsions de tension ont une amplitude inférieure ou égale à la tension d'alimentation Vcc du détecteur de fronts 221 (il n'est pas exclu que l'amplitude de quelques impulsions puissent dépasser la tension d'alimentation Vcc du détecteur de fronts 221). Le convertisseur analogique-numérique 222 est configuré pour transformer ensuite le signal analogique (éventuellement post-traité de la façon décrite ci-après) en une séquence de bits aléatoire.

Le détecteur de fronts 221 comprend de préférence un circuit dérivateur. Les impulsions de tension produites par le détecteur de fronts 221 présentent alors une amplitude qui est fonction de la dérivée du signal bruité V_{D}, soit la vitesse à laquelle le signal bruité V_{D} varie. Le circuit dérivateur comprend de préférence un amplificateur opérationnel (AOP), une première capacité C1 disposée sur une liaison d'entrée de l'amplificateur opérationnel, en aval de la source de bruit 21, et une première résistance R1 disposée dans une boucle de rétroaction de l'amplificateur opérationnel. Une deuxième capacité C2 peut être connectée en parallèle de la première résistance R1 pour éviter que le signal de sortie du circuit dérivateur ne puisse osciller. Par ailleurs, une deuxième résistance R2 peut être connectée en série avec la première capacité C1 pour limiter le gain de l'amplificateur au rapport des valeurs de résistance R1/R2.

Le circuit d'extraction peut également comprendre un circuit redresseur 223 et/ou un circuit limiteur de tension 224 disposés entre le détecteur de fronts 221 et le convertisseur analogique-numérique 222.

L'entrée du circuit redresseur 223 est reliée (de préférence directement) à la sortie du détecteur de fronts 221. Il convertit les impulsions de tension négatives produites par le détecteur de fronts 221 en impulsions de tension positives. Le circuit redresseur 223 est particulièrement avantageux car il augmente considérablement le débit de bits générés par le circuit RNG 20, en doublant (approximativement) le nombres d'impulsions de tension positives en entrée du convertisseur analogique-numérique 222. Le circuit redresseur 223 comprend par exemple un pont de diodes, tel qu'illustré sur la figure 2.

Le circuit limiteur de tension 224 est de préférence disposé entre le circuit redresseur 223 et le convertisseur analogique-numérique 222. Il limite l'amplitude des impulsions de tension positives à une valeur limite de tension, par exemple comprise entre 0 V et la tension d'alimentation V_{DD} du convertisseur analogique-numérique 222. Il comprend par exemple une diode Zener montée en inverse. La valeur limite de tension est alors égale à la tension Zener (ou tension d'avalanche) de la diode Zener.

Dans ce premier mode de réalisation, le convertisseur analogique-numérique 222 comprend un bascule D (« D flip-flop » en anglais) cadencée par un signal d'horloge CLK. L'entrée (D) de la bascule D reçoit le signal analogique, tel que délivré en sortie par le détecteur de fronts 221 ou avantageusement redressé par le circuit redresseur 223 et/ou limité en tension par le circuit limiteur de tension 224. Lorsqu'au front montant du signal d'horloge CLK l'amplitude des impulsions de tension positives est supérieure ou égale à une tension de référence (dite de déclenchement de la bascule), par exemple la moitié de la tension d'alimentation V_{DD} de la bascule D, la bascule D génère un bit de valeur '1'. Lorsqu'au contraire l'amplitude des impulsions de tension positives est strictement inférieure à la tension de référence au front montant du signal d'horloge CLK, la bascule D génère un bit de valeur '0'. La bascule D effectue ainsi une numérisation du signal analogique.

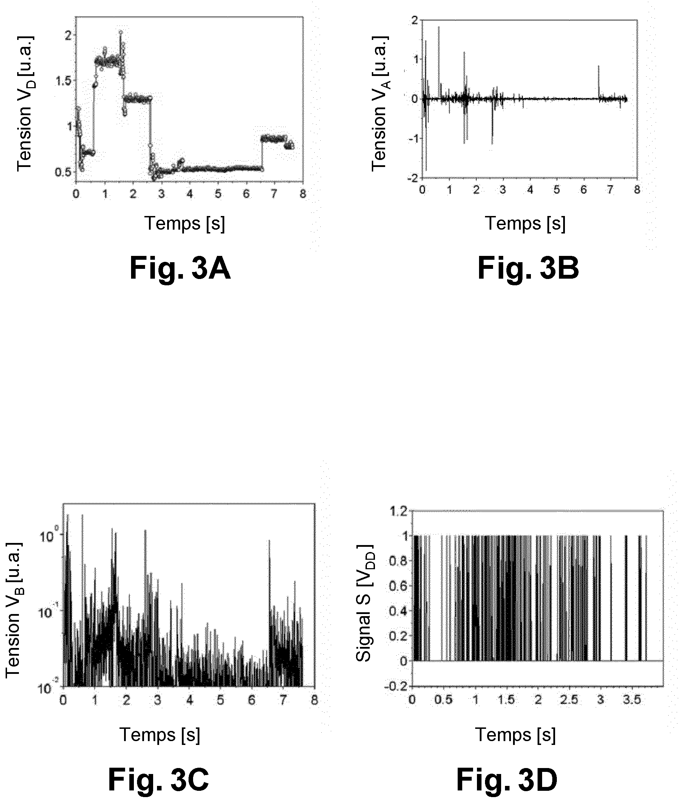

Les figures 3A à 3D sont des graphiques représentant différents signaux du circuit RNG de la figure 2 en fonction du temps.

[Fig. 3A] montre un exemple de signal en tension V_{D} produit par la source de bruit 21. Ce signal a été obtenu en lisant la cellule mémoire résistive 211. Pour ce faire, une tension de lecture V_{R} est appliquée sur la deuxième électrode de la cellule mémoire résistive 211, tandis que le transistor de sélection 212 est rendu passant. La tension de lecture V_{R} est par exemple comprise entre 0,2 V et 0,5 V (suivant le type de cellule mémoire résistive 211).

Le signal de lecture de la cellule mémoire est entaché de RTN. Ce type de bruit est reconnaissable aux différents paliers qu'il forme, ces paliers étant séparés par des transitions abruptes (autrement dit à sa forme en créneaux).

[Fig. 3B] montre le signal analogique en tension V_{A} obtenu en sortie du détecteur de fronts 221. Ce signal analogique V_{A} correspond à la dérivée du signal de lecture de la figure 3A. Il comporte des impulsions de tension positives et des impulsions de tension négatives. Chaque impulsion de tension positive correspond à une transition montante du signal de lecture et chaque impulsion de tension négative correspond à une transition descendante du signal de lecture.

[Fig. 3C] montre (avec une échelle de tension logarithmique, et non plus linéaire) le signal analogique V_{B} redressé par le circuit redresseur 223. Celui-ci ne comporte plus que des impulsions de tension positives.

Enfin, [Fig. 3D] montre la séquence de bits aléatoire S délivrée par le convertisseur analogique-numérique 222. Celle-ci se compose d'une succession de bits de valeur '1' ou '0'. Chaque bit de valeur '1' correspond à une impulsion de tension positive (du signal analogique modifié) ayant une amplitude supérieure ou égale à la tension de référence de la bascule D. Chaque bit de valeur '0' correspond à une impulsion de tension positive ayant une amplitude strictement inférieure à la tension de référence de la bascule D ou à une absence d'impulsion au front montant du signal d'horloge CLK.

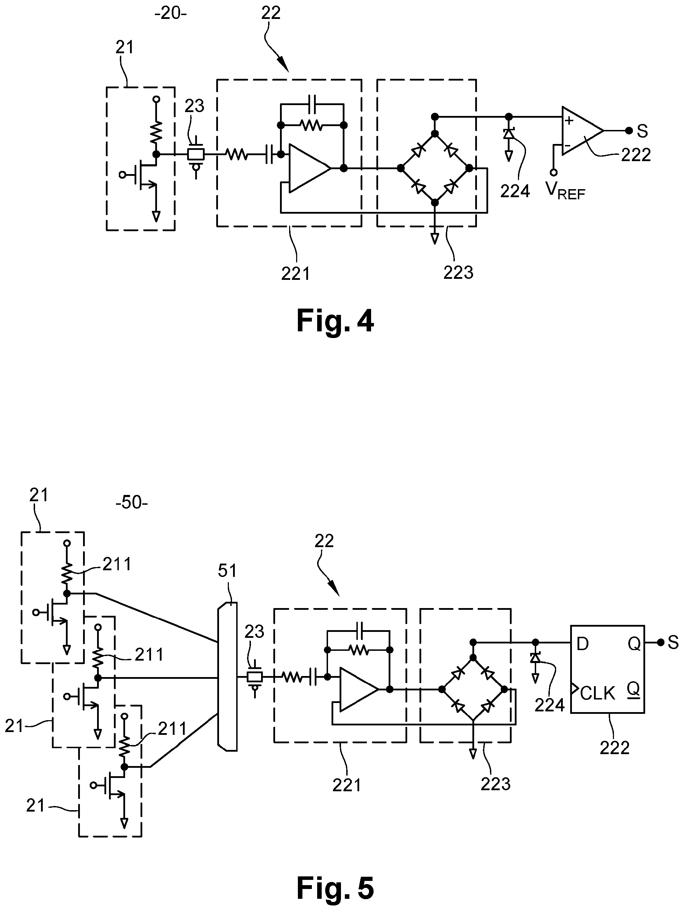

La figure 4 montre le schéma électrique d'un circuit RNG 20 selon un deuxième mode de réalisation de l'invention.

Dans ce deuxième mode de réalisation, le convertisseur analogique-numérique 222 comprend un comparateur (c.-à-d. un détecteur de niveaux) au lieu de la bascule D. Le comparateur possède une première entrée (positive) reliée à la sortie du détecteur de front 221, de préférence par l'intermédiaire du circuit redresseur 223 et/ou du circuit limiteur de tension 224, et une deuxième entrée (négative) connectée à une tension de référence VREF. La tension de référence VREF peut être fixée à une valeur très faible, par exemple comprise entre 0,1 V et 0,5 V, étant donné que toutes les impulsions de tension positives démarrent à 0 V. Chaque impulsion de tension positive ayant une amplitude supérieure ou égale à la tension de référence V_{REF} génère en sortie du comparateur un bit de valeur '1'. Chaque impulsion de tension positive ayant une amplitude strictement inférieure à la tension de référence V_{REF} génère en sortie du comparateur un bit de valeur '0'.

Ainsi, par rapport au premier mode de réalisation, un plus grand nombre d'impulsions de tension sont détectées et le débit de la séquence de bits est plus important.

Le détecteur de fronts 221 du circuit RNG 20 facilite la numérisation du signal bruité, car les impulsions de tension qu'il produit ont une plage de variation connue. Celle-ci s'étend de 0 V à approximativement la tension d'alimentation Vcc du détecteur de fronts 221. Il n'y a donc plus de difficulté pour fixer la tension de référence afin de convertir le signal analogique en une séquence de bits aléatoire. Le risque que le circuit RNG 20 devienne défaillant pour cause de déviation de la source de bruit 21 est par conséquent nul.

Grâce à ce détecteur de fronts 221, un convertisseur analogique-numérique aussi simple qu'une bascule D ou un comparateur peut être utilisé, ce qui a pour effet de limiter la surface de silicium occupée par le circuit RNG et son coût de fabrication.

La figure 5 représente schématiquement un circuit RNG 50 selon un troisième mode de réalisation de l'invention. Le circuit RNG 50 comprend plusieurs sources de bruit 21, de préférence identiques, afin d'augmenter le débit de la séquence de bits aléatoire S générée par le circuit. Les différentes sources de bruit 21 peuvent être couplées à un même circuit d'extraction 22 (par exemple identique à celui de la figure 2 ou à celui de la figure 4) par l'intermédiaire d'un multiplexeur 51. Au moyen d'un circuit d'adressage, le multiplexeur 51 connecte successivement les sources de bruit 21 au circuit d'extraction 22, pour échantillonner et numériser le signal bruité de chaque source de bruit 21. La fréquence de balayage du multiplexeur 51 est supérieure à la fréquence des variations de chaque signal bruité.

Dans une variante de réalisation non représentée par les figures, chaque source de bruit 21 est couplée à son propre circuit d'extraction 22. Autrement dit, le circuit RNG comprend autant de circuits d'extraction 22 que de sources de bruit 21. Les sorties des différents circuits d'extraction 22 sont reliées à un multiplexeur, qui « agrège » les différentes séquences de bits aléatoire à faible débit en une seule séquence de bits aléatoire de plus fort débit.

Dans le cas de sources de bruit 21 comprenant chacune une cellule mémoire résistive 211, les différentes cellules mémoires résistives 211 du circuit RNG peuvent appartenir à une même matrice de cellules mémoires résistives. Certaines cellules mémoires de la matrice sont ainsi dédiées à la génération de nombres aléatoires, tandis que les autres cellules mémoire de la matrice sont dédiées au stockage d'information.

Le circuit générateur de nombres aléatoires selon l'invention n'est pas limité aux modes de réalisation décrits en référence aux figures 2 à 5 et de nombreuses variantes et modifications apparaîtront à l'homme du métier. En particulier, d'autres types de bruit que le RTN peuvent être exploités pour générer des nombres (véritablement) aléatoires. On peut citer à titre d'exemple le bruit thermique, dû aux mouvements aléatoires des porteurs de charge dans les matériaux semi-conducteurs, le bruit dû aux mouvements des atomes qui constituent le filament conducteur d'une cellule mémoire résistive... La source de bruit 21 n'est donc pas nécessairement une source de RTN.

De la même façon, la source de bruit 21 ne comprend pas nécessairement une cellule OxRAM. Elle peut notamment comprendre un autre type de cellule mémoire résistive filamentaire, par exemple une cellule de mémoire vive à pont conducteur (ou CBRAM, pour « Conductive Bridge Random Access Memory »), qui produit également du RTN. Alternativement, la source de bruit 21 peut comprendre un transistor MOS (source de RTN ou de bruit thermique) ou une résistance (source de bruit thermique).

Le convertisseur analogique-numérique 222 peut comprendre une bascule de Schmitt au lieu d'une bascule D ou d'un comparateur. La bascule de Schmitt se comporte comme une bascule D mais présente l'avantage d'avoir une tension de déclenchement paramétrable entre 0 V et sa tension d'alimentation (Vdd).

## Revendications

1. Circuit générateur de nombres aléatoires (20, 50) comprenant :
- une source de bruit (21) capable de fournir un signal bruité (V_{D}) variant de manière aléatoire ;
- un circuit d'extraction (22) du signal bruité (V_{D}) comprenant :
∘ un détecteur de fronts (221) comprenant un circuit dérivateur et configuré pour produire à partir du signal bruité (V_{D}) un signal analogique comprenant des impulsions de tension, chaque impulsion de tension correspondant à un front montant ou descendant du signal bruité (V_{D}) et présentant une amplitude qui est fonction de la dérivée du signal bruité (V_{D}) ;
∘ un convertisseur analogique-numérique (222) configuré pour générer une séquence de bits aléatoire (S) à partir du signal analogique.

2. Circuit générateur de nombres aléatoires (20, 50) selon la revendication 1, comprenant en outre un circuit redresseur (223) disposé entre le détecteur de fronts (221) et le convertisseur analogique-numérique (222).

3. Circuit générateur de nombres aléatoires (20, 50) selon l'une des revendications 1 et 2, comprenant en outre un circuit limiteur de tension (224) disposé entre le détecteur de fronts (221) et le convertisseur analogique-numérique (222).

4. Circuit générateur de nombres aléatoires (20, 50) selon l'une quelconque des revendications 1 à 3, dans lequel le convertisseur analogique-numérique (222) comprend une bascule D cadencée par une horloge (CLK), la bascule D comprenant une entrée (D) reliée au détecteur de fronts (221).

5. Circuit générateur de nombres aléatoires (20, 50) selon l'une quelconque des revendications 1 à 3, dans lequel le convertisseur analogique-numérique (222) comprend un comparateur, le comparateur ayant une première entrée reliée au détecteur de fronts (221) et une deuxième entrée connectée à une tension de référence (VREF).

6. Circuit générateur de nombres aléatoires (20, 50) selon l'une quelconque des revendications 1 à 5, dans lequel la source de bruit (21) est une source de bruit en créneaux (RTN).

7. Circuit générateur de nombres aléatoires (20, 50) selon l'une quelconque des revendications 1 à 6, dans lequel la source de bruit (21) comprend une cellule mémoire résistive (211) de type filamentaire, telle qu'une cellule de mémoire résistive à base d'oxyde (OxRAM).

8. Circuit générateur de nombres aléatoires (20, 50) selon la revendication 7, dans lequel la cellule mémoire résistive (21) est dans un état fortement résistif et présente une résistance électrique supérieure ou égale à 30 KΩ.

9. Circuit générateur de nombres aléatoires (20, 50) selon l'une quelconque des revendications 1 à 8, dans lequel la source de tension (21) est couplée au circuit d'extraction (22) par l'intermédiaire d'un interrupteur (23).
